# EUROPÄISCHE PATENTSCHRIFT

(11) **EP 0 653 429 B1**
(45) Veröffentlichungstag und Bekanntmachung des Hinweises auf die Patenterteilung: **13.06.2001**
(21) Anmeldenummer: 94117244.7
(22) Anmeldetag: 02.11.1994
(51) Int. Cl.: C07F 7/12, C07F 7/18, G01N 33/52

(54) **Neue Silane und deren Verwendung für die Silanierung von dielektrischen Materialien**
New silanes and their use in silylation of dielectric materials
Silanes neuves et leur application dans la silylation des matériaux diélectriques

(30) Priorität: 12.11.1993 CH 340093
(43) Veröffentlichungstag der Anmeldung: 17.05.1995
(73) Patentinhaber: F. HOFFMANN-LA ROCHE AG, 4002 Basel (CH)
(72) Erfinder: Barner, Richard, CH-4148 Witterswil (CH); Huber, Walter, CH-4303 Kaiseraugst (CH); Hübscher, Josef, CH-4208 Nunningen (CH); Hurst, Jürg, CH-4057 Basel (CH); Schlatter, Daniel, CH-4104 Oberwil (CH)
(74) Vertreter: Jung, Michael, Dr.

(56) Entgegenhaltungen:
- EP-A- 0 261 642
- EP-A- 0 485 985
- DE-A- 2 028 702
- US-A- 3 790 613
- CHEMICAL ABSTRACTS, vol. 119, no. 25, 20. Dezember 1993, Columbus, Ohio, US; abstract no. 265654, WIRTH H J ET AL 'High-performance liquid chromatography of amino acids, peptides and proteins. CXXX. Modified porous zirconia as sorbents in affinity chromatography' & J. CHROMATOGR. (JOCRAM,00219673);93; VOL.646 (1); PP.143-51, CENTRE FOR BIOPROCESS TECHNOLOGY, MONASH UNIVERSITY;CLAYTON, VIC.; 3168; AUSTRALIA (AU)
- CHEMICAL ABSTRACTS, vol. 119, no. 21, 22. November 1993, Columbus, Ohio, US; abstract no. 226039, VORONKOV M G ET AL 'Triethoxy(3-isothiocyanatopropyl)silane' & IZV. AKAD. NAUK, SER. KHIM. (IASKEA);92; (11); PP.2681-2, IRKUTSK INST. ORG. CHEM.;IRKUTSK; 664003; RUSSIA (RU)
- CHEMICAL ABSTRACTS, vol. 091, no. 6, 6. August 1979, Columbus, Ohio, US; abstract no. 049008, GALUNSKI B ET AL 'A new method for determining amino and isothiocyanate groups on the surface of inorganic supports for immobilized enzymes' & DOKL. BOLG. AKAD. NAUK (DBANAD,03668681);78; VOL.31 (8); PP.999-1002, INST. ORG. CHEM.;SOFIA; BULG.
- CHEMICAL ABSTRACTS, vol. 104, no. 5, 3. Februar 1986, Columbus, Ohio, US; abstract no. 031104, RENAUER D ET AL 'Fractionation of membrane proteins on immobilized lectins by high-performance liquid affinity chromatography' & ANAL. BIOCHEM. (ANBCA2,00032697);85; VOL.151 (2); PP.424-7, INST. TOXIKOL.;MAINZ; 6500; FED. REP. GER. (DE)
- CHEMICAL ABSTRACTS, vol. 093, no. 25, 22. Dezember 1980, Columbus, Ohio, US; abstract no. 234552, 'Support for ion-exchange chromatographic columns' & JP-A-8 066 756 (TOYO SODA MFG. CO., LTD.;JAPAN) 20. Mai 1980
- CHEMICAL ABSTRACTS, vol. 117, no. 24, 14. Dezember 1992, Columbus, Ohio, US; abstract no. 235228, IMAI T ET AL 'Epoxy resin compositions with good adhesion' & JP-A-04 145 119 (TOSHIBA SILICONE CO., LTD.;JAPAN) 19. Mai 1992
- CHEMICAL ABSTRACTS, vol. 113, no. 22, 26. November 1990, Columbus, Ohio, US; abstract no. 193572, KURAMOTO S ET AL 'Fine silica sphere-containing alkoxysilane coatings' & JP-A-0 297 581 (NIPPON SHOKUBAI KAGAKU KOGYO CO., LTD.;JAPAN) 10. April 1990
- CHEMICAL ABSTRACTS, vol. 116, no. 8, 24. Februar 1992, Columbus, Ohio, US; abstract no. 061123, SHIOBARA T ET AL 'Epoxy resin potting compositions for semiconductors' & JP-A-03 134 016 (SHIN-ETSU CHEMICAL INDUSTRY CO., LTD.;JAPAN) 7. Juni 1991
- CHEMICAL ABSTRACTS, vol. 115, no. 5, 5. August 1991, Columbus, Ohio, US; abstract no. 049025, YAMAMOTO T ET AL 'One-pot synthesis of isothiocyanates from primary amines in non-aqueous system. I. Investigation of the method using N,N'-dicyclohexylcarbodiimide as dehydrosulfinylating agent' & KENKYU HOKOKU - KANTO GAKUIN DAIGAKU KOGAKUBU (KGDKAT,03685373);91; VOL.34 (2); PP.192-7, KANTO GAKUIN UNIV.;COLL. ENG.; YOKOHAMA; 236; JAPAN (JP)
- CHEMICAL ABSTRACTS, vol. 116, no. 20, 18. Mai 1992, Columbus, Ohio, US; abstract no. 201165v, YAJIMA, H. 'Durable plastic lenses for eyeglasses' Seite 446 ; & JP-A-03 284 715 (HOYA CORP.)
- CHEMICAL ABSTRACTS, vol. 115, no. 12, 23. September 1991, Columbus, Ohio, US; abstract no. 118992w, SADA, T ET AL. 'Porous glass bodies with improved properties' Seite 280 ; & JP-A-0 333 029 (TOKUYAMA SODA CO., LTD.)

## Beschreibung

Die vorliegende Erfindung betrifft neue Silane sowie deren Verwendung für die Silanierung dielektrischer Materialien und für die Verankerung biologisch aktiver Verbindungen. Mit Silanschichten versehene dielektrische Materialien werden als Festphasen in der Analytik eingesetzt (Methods in Enzymology 44 (1976), 134). Bevorzugterweise finden die neuen Silane Verwendung für die Beschichtung von Signalwandlern z.B. eines optischen Wellenleiters in der Sensorik.

Optische Biosensoren bestehen beispielsweise aus einem erkennenden Element und einem optischen Signalwandler (Trends in Biotechnol. 2 (1984), 59); ( Opt. Lett. 9 (1984) 137); (Sensors and Actuators A, 25 (1990) 185); (Sensors and Actuators B, 6 (1992) 122); (Proc. Biosensors 92, extended abstracts,pp 339 u.347). Die Aufgabe des erkennenden Elements besteht im selektiven Binden oder Umwandeln des Analyts. Erfüllt wird diese Aufgabe durch das Immobilisieren von biologischen Erkennungsmolekülen (z.B. Antikörper, Antigene, Liganden, ssDNA) auf der Oberfläche eines Signalwandlers. Hierzu wird im allgemeinen die Oberfläche des Signalwandlers ( z.B. die Oberfläche eines dielektrischen Wellenleiters) mit einer organischen Trägerschicht versehen an welche die Erkennungsmoleküle kovalent gebunden werden. EP-A 0 261 642 beispielsweise beschreibt die Verwendung von Silanen zum Aufbau einer chemisch fixierten organischen Schicht. Besonders geeignet in diesem

Zusammenhang erweisen sich organische Trägerschichten mit geordneter, kompakter Anordnung der Moleküle, wie in der europäischen Patentanmeldung EPA-596421 beschrieben. Diese Erkennungsmoleküle können dabei sowohl in ihrer natürlich vorkommenden und isolierbaren Form als auch in einer chemisch oder biotechnologisch herstellbaren Form verwendet werden.

Derartige Biosensoren können eingesetzt werden für die Bestimmung von Analytkonzentrationen z.B. in der Human- und Veterinärdiagnostik, in der Umweltanalytik und in der Lebensmittelanalytik oder innerhalb der biochemischen Forschung für die Quantifizierung von intermolekularen Wechselwirkungen biologisch aktiver Substanzen (z.B. Antikörper-Antigen-Wechselwirkung, Rezeptor-Ligand-Wechselwirkung, DNA-Protein-Wechselwirkung etc.).

Für den Aufbau der organischen Trägerschicht wird beispielsweise die Wellenleiteroberfläche mit Silanen der allgemeinen Formel I behandelt.

(R¹R²R³)Si-Y-X I

- Si(R¹R²R³) stellt eine Kopplungsgruppe zur wellenleitenden Schicht dar. R¹R²R³ bedeuten Alkyl, Alkoxy oder Halogen wobei mindestens eine der Gruppen Halogen oder Alkoxy ist.
- Y ist eine Spacergruppe und als solche beispielsweise eine Alkylenkette, eine Fluoralkylenkette oder eine Oligooxyalkylenkette.
- X ist eine chemisch reaktive Gruppe mittels derer biologisch erkennende Moleküle an die organische Trägerschicht gebunden werden können. Bekannte reaktive Gruppen sind beispielsweise Carbonsäurehalogenide (-COHal), Olefine (-CH=CH₂), Nitrile (-CN), Thiocyanate (-SCN), Thioacetate (-SCOCH₃).

Die mit den oben beschriebenen Silanen beschichteten dielektrischen Wellenleiter sind Hydrolyse - instabil wenn die reaktive Gruppe X z. B. ein Carbonsäurehalogenid ist. Ist die reaktive Gruppe X beispielsweise ein Olefin, muss das Olefin für die nachfolgende Immobilisierung von biologisch erkennenden Molekülen in einem weiteren nachträglichen Schritt modifiziert und aktiviert werden. Diese nachfolgende Behandlung führt dann zu Hydrolyse-stabilen organischen Trägerschichten mit reaktiven Gruppen. Solche nachträglich gebildeten reaktiven Gruppen sind beispielsweise Epoxide, N-hydroxysuccinimid-aktivierte Carboxylsäuren, Thiole und dergleichen. Es ist im allgemeinen sehr aufwendig, quantitativ derartige reaktive Gruppen an einer Oberfläche zu erzeugen.

Der Erfindung liegt somit die Aufgabe zugrunde Silane bereitzustellen, die an dielektrische Materialien gebunden werden können, wobei die Silane bereits über Hydrolyse-stabile, reaktive Gruppen X verfügen, die die Immobilisierung eines organischen oder eines biologisch erkennenden Moleküls direkt, ohne weiteren Aktivierungsschritt auf der Oberfläche, erlauben.

Die Aufgabe wird gelöst durch Silane der allgemeinen Formel I

(R¹R²R³)Si-Y-X I

worin R¹R²R³ Halogen bedeuten und worin Y eine
Alkylenkette [-CH₂-(CH₂)ₙ-CH₂-] bedeutet oder eine Fluoralkylenkette [-CH₂-(CF₂)ₙ-CH₂-] ,[-CH₂-(CF₂)ₙ-CF₂-] mit n= 1-20 oder eine Oligooxyalkylenkette -[(CH₂)_{n'}-O-(CH₂)_{n''}]ₘ- mit n',n" =2-6 und m =2-6 wobei die Silane dadurch gekennzeichnet sind, dass die Gruppe X ein Epoxid oder ein Anhydrid einer Dicarbonsäure mit 4-5 C-Atomen bedeutet.

Die Gruppe Si(R¹R²R³) stellt eine Kopplungsgruppe zur wellenleitenden Schicht dar. Der Ausdruck Halogen bedeutet im Rahmen der vorliegenden Erfindung Chlor oder Brom. Bevorzugt wird Chlor. Durch den Einsatz von Trichlorsilanen als organische Trägerschichten auf dielektrischen Wellenleitern lassen sich sehr stabile, kompakte und geordnete Sensoroberflächen mit guten optischen Eigenschaften erzeugen.

Der Ausdruck Alkyl bedeutet im Rahmen der vorliegenden Erfindung gradkettige oder verzweigte Alkylketten mit 1-6 C-Atomen wie beispielsweise methyl, ethyl, n -propyl, isopropyl, butyl, tert.butyl, pentyl, hexyl und dergleichen.

Der Ausdruck Alkoxy bedeutet im Rahmen der vorliegenden Erfindung Gruppen in denen der Alkylrest die vorhergehende Bedeutung hat.

Der Ausdruck Aryl bedeutet einen unsubstituierten oder substituierten Phenyl- oder Naphthyl-Rest oder dergleichen. Ein geeigneter Substituent ist beispielsweise eine Alkylgruppe.

Die Gruppe X ist eine Hydrolyse-stabile, reaktive Gruppe, welche nach dem Aufbringen des Silans auf die Oberfläche für das Verankern zusätzlicher organischer Moleküle oder für das Verankern von Biomolekülen eingesetzt wird.

Die erfindungsgemässen neuen Silane haben folgende Vorteile:

Die reaktiven Gruppen X der Silane sind Hydrolyse-stabil aber genügend reaktiv, sodass die Immobilisierung eines organischen oder eines biologisch erkennenden Moleküls direkt, ohne weiteren Aktivierungsschritt der Silanschicht erfolgen kann.

Die Silane eignen sich zur direkten Beschichtung von dielektrischen Materialien im speziellen von dielektrischen Wellenleitern welche bevorzugt aus ZrO₂, HfO₂, Ta₂O₅, SiO₂, Al₂O₃ oder TiO₂ bestehen.

Die Silane können sowohl aus Lösung als auch aus der Gasphase auf die Oberfläche von dielektrischen Materialien aufgebracht werden.

Die Hydrolysestabilität der reaktiven Gruppen bedingt eine verbesserte Lagerstabilität der Silanschichten und erlaubt deren Einsatz direkt in wässrigem Medium.

Die kurzkettigen Silane mit beispielsweise einer Alkylenkette [-CH₂-(CH₂)ₙ-CH₂-] mit n=1-3 sind ebenfalls für Silanierungen geeignet, doch sind für den Aufbau orientierter, kompakter Schichten, wie sie beispielsweise in der Biosensorik gebraucht werden, die langkettigen Analoga vorzuziehen.

Eine weitere Aufgabe der vorliegenden Erfindung ist es, mit orientierten, kompakten organischen Trägerschichten versehene dielektrische Wellenleiter bereitzustellen.

Die Aufgabe wird gelöst durch einen dielektrischen Wellenleiter an dessen Oberfläche eine organische Trägerschicht gebunden ist, dadurch gekennzeichnet, dass die organische Trägerschicht mit Silanen gemäss Anspruch 1 aufgebaut wird und aus Untereinheiten der allgemeinen Formel II besteht. 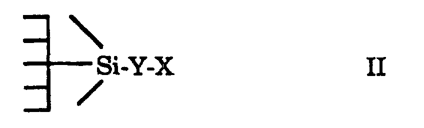 worin Y eine Alkylenkette [-CH₂-(CH₂)ₙ-CH₂-] bedeutet oder eine Fluoralkylenkette [-CH₂-(CF₂)ₙ-CH₂-] ,[-CH₂-(CF₂)ₙ-CF₂-] mit n= 6-20 oder eine Oligooxyalkylenkette -[(CH₂)_{n'}-O-(CH₂)_{n"}]ₘ- mit n',n" = 2-6 und m =2-6 und wobei die Gruppe X ein Epoxid oder ein Anhydrid einer Dicarbonsäure mit 4-5 C-Atomen bedeutet.

Die Silanschichten können aus reinen Alkylenketten, Fluoralkylenketten oder Oligooxyalkylenketten bestehen oder aus einer Kombination von Alkylenketten und Fluoralkylenketten oder aus einer Kombination von Alkylenketten und Oligooxyalkylenketten.

Aufgrund der langen Spacergruppe Y bilden sich bei der Silanierung selbst ordnende Monolagen aus, welche kompakt sind, einen hohen Ordnungsgrad bezüglich der reaktiven Gruppen X aufweisen und die optischen Eigenschaften des Wellenleiters nicht beeinträchtigen.

Ein weiterer Gegenstand der Erfindung betrifft die Verwendung der erfindungsgemässen neuen Silane der Formel I zur Beschichtung von dielektrischen Materialien im besonderen von dielektrischen Wellenleitern, welche bevorzugt aus ZrO₂, HfO₂, Ta₂O₅, oder TiO₂ bestehen. Gegebenenfalls kann auf den eigentlichen Wellenleiter zunächst eine weitere dünne Schicht (d< 20nm) von einem silanisierbaren Material (SiO₂, Al₂O₃ u.s.w.) aufgebracht sein. Diese anorganische Zusatzschicht wird zum Ankoppeln weiterer organischer Moleküle bzw. zum Ankoppeln biologisch aktiver Moleküle eingesetzt.

Nach Beschichtung von dielektrischen Wellenleitern mit den erfindungsgemässen neuen Silanen können an die reaktive Gruppe X weitere Moleküle angekoppelt werden, wie in der europäischen Patentanmeldung EPA-596421 beschrieben, sodass eine geordnete Schicht gebildet wird, die aus Untereinheiten der allgemeinen Formel IIa besteht. 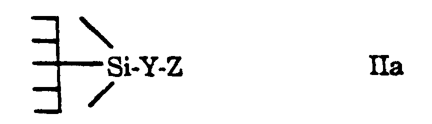 wobei das Si-Atom direkt an die Festphase z.B. des dielektrischen Wellenleiters gebunden ist.

Dabei bedeuten die Gruppen Z:
- Hydroxyl-, Carboxyl-, Amin, Methyl-, Alkyl-, Fluoralkyl-Gruppen
- Derivate von hydrophilen kurzkettigen Molekülen wie Oligovinylalkoholen, Oligoacrylsäuren, Oligoethylenglycolen
- Derivate von mono- oder oligo-Sacchariden mit 1-7 Zuckereinheiten
- Derivate von Carboxyglycosiden
- Derivate von Aminoglycosiden wie Fradiomycin, Kanamycin, Streptomycin, Xylostasin, Butirosin, Chitosan
- Derivate von Hydrogel bildenden Gruppen natürlichen oder synthetischen Ursprungs wie Dextran, Agarose, Algininsäure, Stärke, Zellulose und Derivate derartiger Polysaccharide oder hydrophile synthetische Polymere wie Polyvinylalkohole, Polyacrylsäuren, Polyethylenglykole und Derivate derartiger Polymere .
- Ein erkennendes Molekül z.B. Antikörper, Antigene, Liganden, ssDNA.
- Eine Gruppe der obigen Bedeutung von Z an die ein erkennendes Molekül gebunden ist.

Die folgenden Beispiele zeigen Wege zur Herstellung der neuen Verbindungen und zu deren Verwendung.

### I. Herstellung von Trichlorsilanen, die als reaktive Gruppe ein Epoxid tragen.

### Beispiel 1:

### Herstellung von 7,8-Epoxi-octyl-trichlorsilan

0,05-0,2 g H₂PtCl₆ wurden in 20 ml trockenem Tetrahydrofuran gerührt. Zur gelben Lösung wurden 5 ml (7 g) Trichlorsilan zugegegeben. Zur erhaltenen orangen Suspension wurden 5 g 1,7-Oktadienmonoxid vorsichtig zugetropft. Dann wurde 5 Stunden bei Raumtemperatur gerührt und anschliesend circa 15 Stunden bei 50 °C gerührt. Die Reaktionsmasse wurde im Wasserstrahlvakuum eingeengt und bei 180° C destilliert. 7,1 g eines farblosen Oels wurden erhalten. Die Verbindung wurde durch Elementaranalyse charakterisiert. Die Elementaranalyse zeigte:

| | | | |
|---|---|---|---|
| Berechnet | C=36,72 | H=5,78 | Cl=40,65 |
| Gefunden | C=36,12 | H=6,28 | Cl=40,19 |

### Beispiel 2:

### Herstellung von 9,10-Epoxi-decyl-trichlorsilan

0,05-0,2 g H₂PtCl₆ wurden in 20 ml trockenem Tetrahydrofuran gerührt. Zur gelben Lösung wurden 5 ml (7 g) Trichlorsilan zugegegeben. Zur erhaltenen orangen Suspension wurden 6 g 9,10-Epoxidecen (Decadienmonoxid) vorsichtig zugetropft. Dann wurde 5 Stunden bei Raumtemperatur gerührt und anschliessend circa 15 Stunden bei 50 °C gerührt. Die Reaktionsmasse wurde im Wasserstrahlvakuum eingeengt und bei 200° C destilliert. Circa 8 g eines farblosen Oels wurden erhalten. Die Verbindung wurde durch Elementaranalyse charakterisiert. Die Elementaranalyse zeigte:

| | | | |
|---|---|---|---|
| Berechnet | C=41,46 | H=6,61 | Cl=36,71 |
| Gefunden | C=41,92 | H=6,86 | Cl=36,17 |

### Beispiel 3:

### Herstellung von 13,14-Epoxi-tetradecyl-trichlorsilan

0,05-0,2 g H₂PtCl₆ wurden in 20 ml trockenem Tetrahydrofuran gerührt. Zur gelben Lösung wurden 5 ml (7g) Trichlorsilan zugegegeben. Zur erhaltenen orangen Suspension wurden 8 g 13,14-Epoxitetradecen vorsichtig zugetropft. Dann wurde 5 Stunden bei Raumtemperatur gerührt und anschliessend circa 15 Stunden bei 50 °C gerührt. Die Reaktionsmasse wurde im Wasserstrahlvakuum eingeengt und bei 230° C destilliert. Circa 10 g eines farblosen Oels wurden erhalten. Die Verbindung wurde durch Elementaranalyse charakterisiert. Die Elementaranalyse zeigte:

| | | | |
|---|---|---|---|
| Berechnet | C=48,63 | H=7,87 | Cl=30,76 |
| Gefunden | C=48,01 | H=7,45 | Cl=31,19 |

### II. Herstellung von Trichlorsilanen, die als reaktive Gruppe ein Säureanhydrid tragen

### Beispiel 4

### Herstellung von 2-(11-Trichlorsilyl-undecyl)-bernsteinsäuteanhydrid

0,01 g H₂PtCl₆ wurden in 10 ml trockenem Tetrahydrofuran gerührt. Zur gelben Lösung wurden 0,3 ml (0,35 g) Trichlorsilan zugegeben. Zur erhaltenen orangen Suspension wurden 0,3 g 2-(10-Undecenyl)-bernsteinsäureanhydrid vorsichtig zugetropft. Dann wurde 5 Stunden bei Raumtemperatur gerührt und anschliessend ca. 15 Stunden bei 50°C gerührt. Die Reaktionsmasse wurde im Wasserstrahlvakuum eingeengt und bei 230°C destilliert. Circa 0,4 g eines farblosen Oels wurden erhalten. Die Verbindung wurde durch Elementaranalyse charakterisiert. Die Elementaranalyse zeigte:

| | | | |
|---|---|---|---|
| Berechnet | C=46,46 | H=6,50 | Cl=27,43 |
| Gefunden | C=47,01 | H=6,92 | Cl=26,83 |

### III. Herstellung der Ausgangsverbindungen

### Beispiel 5

### Herstellung von 2-(10-Undecenyl)-bernsteinsäureanhydrid (Grignard Reaktion)

0,1 Mol 10-Undecenyl-magnesiumhalogenid wurden bei -78°C zu einer Suspension von 30 g Maleinsäureanhydrid und 10 g Kupfer-I-iodid in 100 ml trockenem Tetrahydrofuran getropft. Die Reaktionsmasse wurde auf Raumtemperatur erwärmt und anschliessend circa 15 Stunden gerührt. Die Reaktionsmasse wurde eingeengt, der Rückstand mit 100 ml Diethylether aufgenommen, welcher 2% Wasser enthält und weitere 5 'Stunden gerührt. Die erhaltene Suspension wurde filtriert und der Rückstand wurde mit trockenem Ether gewaschen. Das Filtrat wurde eingeengt und im Wasserstrahlvakuum bei 230°C im Kugelrohr destilliert. 9,2 g 2-(10-Undecenyl)-bernsteinsäureanhydrid wurden erhalten. Die Verbindung wurde durch Elementaranalyse charakterisiert. Die Elementaranalyse zeigte:

| | | |
|---|---|---|
| Berechnet | C=71,39 | H=9,59 |
| Gefunden | C= 71,12 | H=9,64 |

### Beispiel 6

### Herstellung von 2-(10-Undecenyl)-bernsteinsäureanhydrid aus 2-(10-Undecenyl)-bernsteinsäure

2,7 g 2-(10-Undecenyl)-bernsteinsäure wurden mit 10 ml Essigsäureanhydrid bei 100 °C gerührt und anschliessend eingeengt und im Wasserstrahlvakuum bei 230 °C destilliert. 2,5g 2-(10-Undecenyl)-bernsteinsäureanhydrid wurden erhalten.

### Beispiel 7

### Herstellung von 2-(10-Undecenyl)-bernsteinsäure aus 2-(10-Undecenyl)-bernsteinsäuremethylester oder 2-(10-Undecenyl)-bernsteinsäureethylester.

2,8 g 2-(10-Undecenyl)-bernsteinsäuremethylester oder 3,0 g 2-(10-Undecenyl)-bernsteinsäureethylester wurden mit conc. Schwefelsäure 1 Stunde bei Raumtemperatur gerührt. Nach Extraktion mit Methylenchlorid wurden 2,4 g 2-(10-Undecenyl)-bernsteinsäureanhydrid erhalten.

### Beispiel 8

### Herstellung von 2-(10-Undecenyl)-bernsteinsäuremethylester

1,76 g Bernsteinsäuremethylester wurden in trockenem Tetrahydrofuran mit 6 mMol Li-diisopropylamid (LDA) ins Enolat übergeführt und dann mit 10-Undecenyl iodid umgesetzt. Die Reaktionsmasse wurde mit 1 ml Methanol und anschliessend mit 10 ml Wasser versetzt und 3 mal mit 20 ml Diethylether extrahiert. Die organischen Phasen wurden getrocknet, eingeengt und im Kugelrohr bei 200°C im Wasserstrahlvakuum destilliert. 534 mg farbloses Oel wurden erhalten. Die Verbindung wurde durch Elementaranalyse charakterisiert. Die Elementaranalyse zeigte:

| | | |
|---|---|---|
| Berechnet | C=68,42 | H=10,13 |
| Gefunden | C=68,61 | H=9,92 |

### Beispiel 9

### Herstellung von 10-Undecenyl iodid

0,27 Mol 10-Undecenyl-tosylat wurden mit 250 g Natriumiodid und 4,4 g Tetrabutylammoniumiodid als Phasentransfer-Katalysator circa 15 Stunden unter Rückfluss umgsetzt. Die Reaktionsmasse wurde 3 mal mit 400 ml Hexan extrahiert. Die organischen Phasen wurden vereint, mit Natriumbisulfit entfärbt und mit Natriumsulfat getrocknet. Dann wurde eingeengt und im Vakuum destilliert. Kp(0,3 mbar) 100 °C. 72,3 g farbloses Oel wurde erhalten. Die Verbindung wurde durch Elementaranalyse charakterisiert. Die Elementaranalyse zeigte:

| | | | |
|---|---|---|---|
| Berechnet | C=47,15 | H=7,55 | I=45,29 |
| Gefunden | C=47,42 | H=7,72 | I=45,01 |

### IV. Aufbringen von dicht gepackten, organischen Monolagen auf TiO₂-Oberflächen z:B. auf der wellenleitenden Schicht eines optischen Signalwandlers aus der Gasphase.

### Beispiel 10

Ausbildung einer organischen Monolage auf TiO₂-Oberflächen durch Behandlung mit 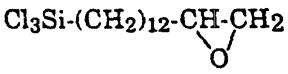 in einem CVD Verfahren (Chemical Vapor Deposition)

Für das Aufbringen der Silane der Formel I aus der Gasphase wurde ein Reaktionsgefäss bereitgestellt, welches bei einem Druck von 10⁻⁵ mbar betrieben werden kann und in welchem die zu beschichtende Probe auf Temperaturen zwischen 30-100°C gebracht werden kann. Dieses Reaktionsgefäss wurde mit einem evakuierbaren, beheizbaren Vorratsgefäss verbunden in dem die für die Beschichtung verwendete Verbindung vorgelegt werden kann (wahlweise kann die Apparatur auch mit mehreren derartigen Vorratsgefässen ausgestattet werden).

Für die Beschichtung wurde der optische Signalwandler in das Reaktionsgefäss eingebracht. Nach Einbringen des Silans 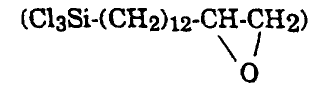 in das Vorratsgefäss wurden Vorratsgefäss und Reaktionskammer auf einen Arbeitsdruck von 10⁻⁵ mbar gebracht. Die zu beschichtende Probe wurde auf 100°C erwärmt. Nach dem Aufwärmen des im Vorratsgefäss vorgelegten Silans auf 50°C wurde die Oberfläche während 1 Stunde mit Reagenz aus der Gasphase behandelt. Anschliessend wurde der Reagenzzufluss gestoppt und die Probe im Vakuum bei 150°C während 15

(Der Nachweis einer organischen Monolage auf der Oberfläche erfolgt über XPS-( X-ray photoelectron spectroscopy) und Kontaktwinkel-Messungen).

Alle Silane der allgemeinen Formel I lassen sich nach einem analogen Verfahren aus der Gasphase auf die Oberfläche aufbringen.

V. Aufbringen von dicht gepackten, organischen Monolagen auf TiO₂-Oberflächen z.B. auf der wellenleitenden Schicht eines optischen Signalwandlers mit einer Lösung von

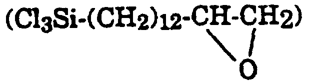

In einem Reaktionsgefäss wurde unter Inertgasatmosphäre eine 0,5% (v/v) Lösung von 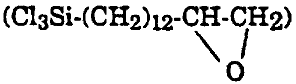 in CCl₄ vorgelegt. Die zu beschichtende Oberfläche wird während 25 min. unter Inertgas mit dieser Lösung in Kontakt gebracht. Nach dieser Behandlung wurde die Oberfläche mit CCl₄, Ethanol und Wasser gereinigt.

Alle Silane der allgemeinen Formel I lassen sich nach einem analogen Verfahren aus der Flüssigphase auf die Oberfläche aufbringen.

## Patentansprüche

1. Silane der allgemeinen Formel I
(R¹R²R³)Si-Y-X I
worin R¹R²R³ Halogen bedeuten und worin Y eine Alkylenkette [-CH₂-(CH₂)ₙ-CH₂-] bedeutet oder eine Fluoralkylenkette [-CH₂-(CF₂)ₙ-CH₂-], [-CH₂-(CF₂)ₙ-CF₂-] mit n = 1-20 oder eine Oligooxyalkylenkette -[(CH₂)_{n'}-O-(CH₂)_{n"}]ₘ- mit n',n" = 2-6 und m = 2-6 wobei die Silane dadurch gekennzeichnet sind, dass die Gruppe X ein Epoxid oder ein Anhydrid einer Dicarbonsäure mit 4-5 C Atomen bedeutet.

2. Silane gemäß Anspruch 1, dadurch gekennzeichnet, daß Y eine Alkylenkette [-CH₂-(CH₂)ₙ-CH₂-], mit n = 6-20 bedeutet.

3. Silane gemäß Anspruch 1, dadurch gekennzeichnet, dass die Gruppe X ein Epoxid ist.

4. Silane gemäß Anspruch 1, dadurch gekennzeichnet, dass die Gruppe X ein Anhydrid einer Dicarbonsäure mit 4-5 C-Atomen bedeutet.

5. Optischer Signalwandler, bestehend aus einem dielektrischen Wellenleiter, an dessen Oberfläche eine organische Trägerschicht gebunden ist, dadurch gekennzeichnet, dass die organische Trägerschicht mit Silanen gemäß Anspruch 1 aufgebaut wird und aus Untereinheiten der allgemeinen Formel II besteht, 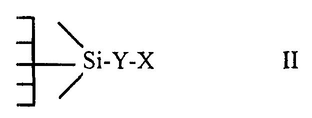 worin Y eine Alkylenkette [-CH₂-(CH₂)ₙ-CH₂-] bedeutet oder eine Fluoralkylenkette [-CH₂-(CF₂)ₙ-CH₂-], [-CH₂-(CF₂)ₙ-CF₂-] mit n = 6-20 oder eine Oligooxyalkylenkette -[(CH₂)_{n'}-O-(CH₂)_{n"}]ₘ- mit n',n" = 2-6 und m = 2-6 und wobei die Gruppe X ein Epoxid oder ein Anhydrid einer Dicarbonsäure mit 4-5 C Atomen bedeutet.

6. Optische Signalwandler gemäß Anspruch 5, dadurch gekennzeichnet, dass die Oberfläche des Signalwandlers mit einer Kombination von Alkylenketten und Fluoralkylenketten oder einer Kombination von Alkylenketten und Oligooxyalkylenketten beschichtet ist.

7. Optischer Signalwandler gemäß Anspruch 5, dadurch gekennzeichnet, dass der dielektrische Wellenleiter aus ZrO₂, HfO₂, Ta₂O₅, oder TiO₂ besteht.

8. Optischer Signalwandler gemäß Anspruch 7, dadurch gekennzeichnet, dass auf den dielektrischen Wellenleiter eine weitere dünne Schicht (d < 20 nm) von einem silanisierbaren Material wie SiO₂ oder Al₂O₃ aufgebracht ist.

9. Verwendung der Silane gemäß Anspruch 1 zur Beschichtung von dielektrischen Materialien.

10. Verwendung von organischen Trägerschichten auf dielektrischen Materialien gemäß einem der Ansprüche 5 - 8, zur Immobilisierung von organischen Molekülen oder biologisch erkennenden Molekülen.

## Claims

1. Silanes of the general formula I
(R¹R²R³)Si-Y-X I
in which R¹R²R³ denote halogen and in which Y denotes an alkylene chain [-CH₂-(CH₂)ₙ-CH₂-] or a fluoroalkylene chain [-CH₂-(CF₂)ₙ-CH₂-], [CH₂-(CF₂)ₙ-CF₂-] where n = 1-20 or an oligooxyalkylene chain -[(CH₂)_{n'}-O-(CH₂)_{n"}]ₘ where n', n" = 2-6 and m = 2-6 in which the silanes are characterized in that the group X denotes an epoxide or an anhydride of a dicarboxylic acid having 4-5 C atoms.

2. Silanes as claimed in claim 1, characterized in that Y denotes an alkylene chain [-CH₂-(CH₂)ₙ-CH₂-], in which n = 6-20.

3. Silanes as claimed in claim 1, characterized in that the group X is an epoxide.

4. Silanes as claimed in claim 1, characterized in that the group X denotes an anhydride of a dicarboxylic acid with 4-5 C atoms.

5. Optical signal converter composed of a dielectric wave conductor on the surface of which an organic carrier layer is bound, characterized in that the organic carrier layer is composed of silanes as claimed in claim 1 and comprises subunits of the general formula II 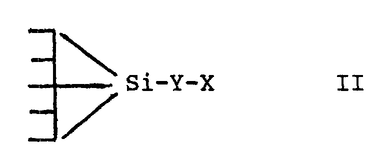 in which Y denotes an alkylene chain [-CH₂-[CH₂)ₙ-CH₂-] or a fluoroalkylene chain [-CH₂-(CF₂)ₙ-CH₂-], [-CH₂-(CF₂)ₙ-CF₂-) where n = 6-20 or an oligooxyalkylene chain [(CH₂)_{n'}-O-(CH₂)_{n"}]ₘ where n', n" = 2-6 and m = 2-6 and wherein the group X denotes an epoxide or an anhydride of a dicarboxylic acid having 4-5 C atoms.

6. Optical signal converter as claimed in claim 5, characterized in that the surface of the signal converter is coated with a combination of alkylene chains and fluoroalkylene chains or a combination of alkylene chains and oligooxyalkylene chains.

7. Optical signal converter as claimed in claim 5, characterized in that the dielectric wave conductor is composed of ZrO₂, HfO₂, Ta₂O₅ or TiO₂.

8. Optical signal converter as claimed in claim 7, characterized in that a further thin layer (d<20 nm) of a silanisable material such as SiO₂ or Al₂O₃ is coated on the dielectric wave conductor.

9. Use of the silanes as claimed in claim 1 to coat dielectric materials.

10. Use of organic carrier layers on dielectric materials as claimed in one of the claims 5 - 8 to immobilize organic molecules or biological detector molecules.

## Revendications

1. Silanes de formule générale I
(R¹R²R³)Si-Y-X I
dans laquelle R¹, R² et R³ sont des halogènes, et Y est un enchaînement alkylène [-CH₂-(CH₂)ₙ-CH₂-] ou un enchaînement fluoralkylène [-CH₂-(CF₂)ₙ-CH₂-], [-CH₂-(CF₂)ₙ-CF₂-] avec n = 1-20, ou un enchaînement oligooxyalkylène -[( CH₂)_{n'}-O-(CH₂)_{n"}-]ₘ-, avec n', n" = 2-6, et m = 2-6, où les silanes sont caractérisés en ce que le groupe X est un époxyde ou un anhydride d'un acide dicarboxylique ayant 4-5 atomes de carbone.

2. Silanes selon la revendication 1, caractérisés en ce que Y est un enchaînement alkylène [-CH₂-(CH₂)ₙ-CH₂-], avec n = 6-20.

3. Silanes selon la revendication 1, caractérisés en ce que le groupe X est un époxyde.

4. Silanes selon la revendication 1, caractérisés en ce que le groupe X est un anhydride d'un acide dicarboxylique ayant 4-5 atomes de carbone.

5. Convertisseur de signal optique, constitué d'un guide d'ondes diélectrique, à la surface duquel est liée une couche support organique, caractérisé en ce que la couche support organique est édifiée avec des silanes selon la revendication 1 et est constituée de sous-unités de formule générale II 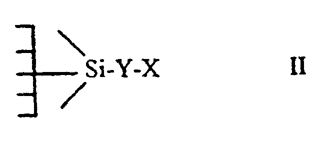 dans laquelle Y est un enchaînement alkylène [-CH₂-(CH₂)ₙ-CH₂-] ou un enchaînement fluoralkylène [-CH₂-(CF₂)ₙ-CH₂-], [-CH₂-(CF₂)ₙ-CF₂-] avec n = 6-20, ou un enchaînement oligooxyalkylène -[( CH₂)_{n'}-O-(CH₂)_{n"}-]ₘ-, avec n', n" = 2-6, et m = 2-6, et où le groupe X est un époxyde ou un anhydride d'un acide dicarboxylique ayant 4-5 atomes de carbone.

6. Convertisseur de signal optique selon la revendication 5, caractérisé en ce que la surface du convertisseur de signal est revêtue d'une combinaison d'enchaînements alkylène et d'enchaînements fluoralkylène ou d'une combinaison d'enchaînements alkylène et d'enchaînements oligooxyalkylène.

7. Convertisseur de signal optique selon la revendication 5, caractérisé en ce que le guide d'ondes diélectrique est constitué de ZrO₂, de HfO₂, de Ta₂O₅ ou de TiO₂.

8. Convertisseur de signal optique selon la revendication 7, caractérisé en ce que sur le guide d'ondes diélectrique est appliquée une couche mince supplémentaire (d < 20 nm) en un matériau silanable tel que SiO₂ ou Al₂O₃,

9. Utilisation des silanes selon la revendication 1 pour revêtir des matériaux diélectriques.

10. Utilisation de couches supports organiques sur des matériaux diélectriques selon l'une des revendications 5-8 pour immobiliser des molécules organiques ou des molécules de reconnaissance biologique.
